# EUROPÄISCHE PATENTSCHRIFT

(11) **EP 0 472 805 B1**
(45) Veröffentlichungstag und Bekanntmachung des Hinweises auf die Patenterteilung: **12.10.1994**
(21) Anmeldenummer: 91103494.0
(22) Anmeldetag: 07.03.1991
(51) Int. Cl.: H02H 9/04, H02H 7/06, H02J 7/16

(54) **Einrichtung zur Begrenzung der Klemmenspannung bei einer Drehstromlichtmaschine**
Arrangement to limit the terminal voltage in an alternator
Dispositif pour limiter la tension aux bornes d'un alternateur triphasé

(30) Priorität: 23.05.1990 DE 4016573
(43) Veröffentlichungstag der Anmeldung: 04.03.1992
(73) Patentinhaber: MERCEDES-BENZ AG, 70327 Stuttgart (DE)
(72) Erfinder: Maass, Manfred, W-7300 Esslingen (DE); Bunke, Joachim, W-7300 Esslingen (DE); Fritz, Martin, W-7062 Rudersberg (DE)

(56) Entgegenhaltungen:
- DE-A- 2 132 719
- DE-A- 3 116 315
- US-A- 3 943 408

## Beschreibung

Die Erfindung betrifft eine Einrichtung zur Begrenzung der Klemmenspannung bei einer Drehstromlichtmaschine nach der Gattung des Anspruchs 1.

In Kraftfahrzeugen werden bekanntermaßen fast nur noch Drehstromlichtmaschinen mit integrierten Gleichrichtersätzen eingesetzt; vielfach sind auch elektronische Regler zur Beeinflussung des Erregungsstromes mitintegrierter Maschinenbestandteil.

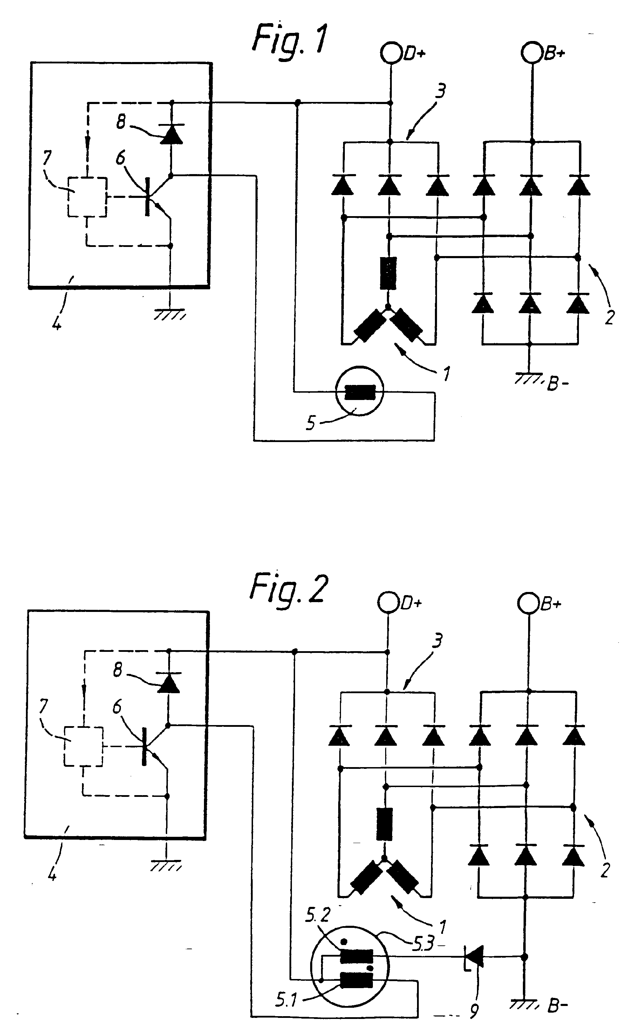

Gemäß Figur 1 wirkt ihre meist in Sternschaltung vorgesehene Ständerwicklung 1 auf den Minuspol B- der Fahrzeugbatterie (Fahrzeugmasse) über die erste Hälfte und auf den Pluspol B+ der Batterie über die zweite Hälfte einer 6-Ventil-Dreiphasengleichrichterbrücke 2. Es ist noch eine weitere Brückenhälfte 3 vorgesehen, über die die Ständerwicklung ebenfalls mit positiver Polung gegenüber der Fahrzeugmasse auf eine separate Nebenklemme D+ wirkt. Von dieser erhält ein Regler 4 seine Betriebsleistung. Nach Maßgabe der daran abgegebenen Spannung versorgt der Regler 4 die umlaufende Erregerwicklung 5 mit Strom.

Diese robuste Konfiguration bietet gegenüber Gleichstromlichtmaschinen bekanntermaßen eine Reihe von Vorteilen, nämlich geringe/s Baugröße und Gewicht, insbesondere bezogen auf die Leistungsabgabe, guten Ladestromertrag schon bei niedriger Drehzahl, leichte Funk-Entstörbarkeit, geringer Wartungsbedarf und hohe Standzeit.

Ein inhärenter Nachteil solcher Lichtmaschinen besteht jedoch darin, daß bei plötzlichem Lastabwurf, etwa beim versehentlichen Lösen der Batterieklemme bei laufendem Motor oder bei Vorliegen eines Wackelkontakts im Hauptstrompfad, für kurze Zeit eine hohe Spannung ins Bordnetz abgegeben wird, welche damit beaufschlagte elektronische Geräte oder elektronisch angesteuerte Verbraucher irreparabel zerstören kann (sog. Load-Dump-Situation).

Diese schadvolle Überspannung begrenzter Dauer kommt dadurch zustande, daß ein vom Regler 4 umfaßtes Stromsteuerelement 6 infolge eines zugleich an der Nebenklemme D+ durch eine Spannungserfassungsanordnung 7 sensierten Spannungsanstiegs dann zwar sperrt und somit - in an sich klemmenspannungsvermindernder Weise - keinen Erregerstrom mehr in die Erregerwicklung 5 einspeist, der unmittelbar zuvor jedoch durch die Erregerwicklung geflossene Erregungsstrom nicht sprungartig auf Null absinken kann, sondern über ein aus Isolationsschutzgründen erforderliches Freilaufventil 8 noch eine Zeitlang aufrechterhalten wird bzw. nur allmählich abklingt. Insoweit kommt es zu einer Verzögerung des Abbaues der magnetischen Erregung und dadurch zu einer unerwünschten Unterstützung und zeitlichen Streckung des Überspannungsimpulses, der somit z.B. 300 ms andauern und dabei bis zu 200 Volt mit einem Ersatzinnenwiderstand von nur 2 Ohm erreichen kann.

Es ist daher Aufgabe der Erfindung, eine Einrichtung zur Begrenzung der Klemmenspannung bei einer Drehstromlichtmaschine zu schaffen, welche mit einfachen Mitteln den Schutz angeschlossener Verbraucher vor lastabwurfbedingten Überspannungsstößen gewährleistet.

Diese Aufgabe wird bei einer gattungsgemäßen Einrichtung mit dem kennzeichnenden Merkmal des Anspruchs 1 gelöst.

Die erfindungsgemäße Einrichtung bei einer Drehstromlichtmaschine erlaubt einen schnellen Feldabbau durch definierte und rasche Umsetzung der Magnetisierungsenergie des Erregerkreises in Wärme. Die Überspannungsspitze wird dabei zur Lieferung eines Stromes zur Feldkompensation der Erregerwicklung im Sinne einer Erniedrigung der induzierten Spannung ausgenutzt.

Vorteilhafte Weiterbildungen sind nach Lehre der darauf rückbezogenen Ansprüche 2 bis 5 gegeben.

Ein Ausführungsbeispiel der Erfindung ist in der Zeichnung dargestellt und nachfolgend erläutert. Es zeigen:
- Figur 1: das bekannte Funktionsschaltbild einer herkömmlichen Drehstromlichtmaschine mit Gleichrichter und Regler;
- Figur 2: das Funktionsschaltbild einer Drehstromlichtmaschine mit der erfindungsgemäßen Einrichtung.

Gegenüber dem bekannten Gegenstand gemäß Figur 1 wird die überraschende Einfachheit der Erfindung aus Figur 2 ersichtlich.

Die Ständerwicklung 1, die Gleichrichterelemente 2 und 3, der Regler 4 mit einem den Erregungsstrom steuernden Bauteil 6, einer letzteres ansteuernden Spannungserfassungsanordnung 7 und einem Freilaufventil 8 entsprechen solchen aus dem Stande der Technik. Erfindungsgemäß weist der Läufer 5.3 jedoch zwei Wicklungen, nämlich die eigentliche Erreger- oder Hauptwicklung 5.1 und eine Hilfswicklung 5.2 auf, die bezüglich ihres Windungssinnes in Reihe geschaltet sind und insoweit als eine Induktivität mit Anzapfung erscheinen. Das insoweit dreipolige Läuferwicklungsgebilde steht (statt üblicherweise über zwei) über drei nicht dargestellte Schleifringe mit restlichen ständerfesten Teilen der Einrichtung in Verbindung.

Während die Erreger- bzw. Hauptwicklung 5.1 in bekannter Weise von der Klemme D+ und über einen steuerbaren Massepfad des Reglers 4 mit Strom versorgt wird und durch ein Freilaufventil 8 überbrückt ist, steht die Hilfswicklung 5.2 - in Reihe geschaltet den Windungssinn der Erreger- bzw. Hauptwicklung 5.1 fortsetzend - einerseits mit der Klemme D+ und andererseits über eine in Sperr- bzw. Zenerrichtung gepolte Zenerdiode 9 mit dem negativen Batteriepol B- bzw. mit der Fahrzeugmasse in Verbindung.

Die Zenerspannung der Zenerdiode 9 ist so bemessen, daß sie einerseits größer ist als die nominale Spannung der Klemme D+ gegen Masse zuzüglich einer noch tolerierbaren Spannungserhöhung, andererseits aber unter dem Bereich jedenfalls schadhafter Überspannung an der Klemme D+ - und insoweit auch einer entsprechenden Überspannung an der den Hauptstrom führenden Klemme B+ - liegt.

Die Einrichtung funktioniert wie folgt.

Solange an der Klemme D+ keine unzulässig hohe Spannung gegenüber der Fahrzeugmasse auftritt, sind die Zenerdiode 9 und die Hilfswicklung 5.2 stromlos. Überschreitet die Spannung an der Klemme D+ hingegen die Zenerspannung, fließt durch die Hilfswicklung 5.2 ein Kompensationsstrom, und zwar mit einer dem Strom in der Erreger- bzw. Hauptwicklung 5.1 entgegengesetzten Durchflutungsrichtung. Da sich die gegensinnigen Durchflutungen augenblicklich aufheben bzw. abschwächen, wird auch der auf eine Stromdurchflutung zurückgehende Teil der vom Läufer insgesamt aufgebauten magnetischen Durchflutung aufgehoben bzw. geschwächt. Die augenblickliche Schwächung des Magnetfeldes bewirkt eine sofortige Abschwächung bzw. Klammerung der an der Klemme D+ abgegebenen Spannung in etwa auf die Zenerspannung der Zenerdiode 9, und dementsprechend eine Begrenzung der Spannung an der unbelasteten bzw. von der Last getrennten Klemme B+, und zwar unabhängig davon, ob ein die Erreger- bzw. Hauptwicklung 5.1 des Läufers durchfließender Strom über das Freilaufventil 8 oder das den Erregungsstrom steuernde Bauelement 6 fließt.

Da Load-Dump-Zustände eine nur begrenzte Dauer (Größenordnung 100...400 ms) haben und die thermische Zeitkonstante der gesamten Läuferwicklung mit Verguß demgegenüber groß ist, kann die Hilfswicklung 5.2 aus wesentlich dünnerem Draht als die Erreger- bzw. Hauptwicklung hergestellt sein, wodurch der zusätzlich für sie benötigte Wickelraum vorteilhaft gering ausfällt. Auch muß der die Hilfswicklung mit Strom versorgende Schleifkontakt nicht für Dauerstromtragfähigkeit ausgelegt sein, da nur bei Vorliegen eines Load-Dump-Zustandes für die oben erwähnte kurze Dauer Strom durch ihn fließt. Sinngemäßes gilt für die Dimensionierung der für die Zenerdiode 9 ggfs. vorzusehende Kühlkapazität zur Abfuhr der Wärme, in welche ein Teil der magnetischen Energie umgesetzt wird.

Erfindungsgemäß kann die Zenerdiode 9 am/im feststehenden Teil oder am/im Läufer der Lichtmaschine angeordnet werden. Vorzugsweise kann sie am/im feststehenden Teil an/in einem auch für ein oder mehrere Gleichrichterventil/e vorgesehenen Kühlelement oder im Falle einer Unterbringung am/im Läufer im Bereich eines besonders forciert kühlluftbeströmten Bauteils, etwa in gutem thermischem Kontakt mit einem wärmeleitenden Kühlrippenkranz o.ä., untergebracht werden.

Die erfindungsgemäße Einrichtung zur Begrenzung der Klemmenspannung bei einer Drehstromlichtmaschine verursacht insoweit wenig Aufwand und Kosten und ist in herkömmlichen Maschinen leicht integrierbar. Da die gegenüber einer herkömmlichen Lichtmaschine zusätzlich benötigten Teile nur im Augenblick eines Load-Dump-Zustandes beansprucht werden und sonst nicht, ist die erfindungsgemäße Einrichtung sehr zuverlässig und bewirkt eine hohe Verfügbarkeit von damit ausgerüsteten Lichtmaschinen.

## Patentansprüche

1. Einrichtung zur Begrenzung der Klemmenspannung bei einer Drehstromlichtmaschine mit einer feststehenden und auf Gleichrichter wirkenden Ständerwicklung (1) und mit einer mit dem Maschinenläufer (5.3) umlaufenden Erregerwicklung (5.1), wobei letztere in Abhängigkeit von der Größe einer abgegebenen Spannung über einen Regler (4) und einen ersten Schleifkontakt mit Erregungsstrom beaufschlagbar ist, und wobei besagter Erregerwicklung (5.1) wenigstens ein bei reglerseitiger Unterbrechung des Erregungsstromes leitendes Freilaufventil (8) parallelgeschaltet ist,
**dadurch gekennzeichnet**,
- daß der Läufer noch eine Hilfswicklung (5.2) aufweist, welche die Erregerwicklung (5.1) mit gleichem Windungssinn fortsetzt, und daß der Verbindungspunkt beider Wicklungen über einen zweiten Schleifkontakt mit der den Erregungsstrom liefernden Maschinenklemme (D+) leitend verbunden ist, daß die Hilfswicklung (5.2) in Serie mit einer Zenerdiode (9) geschaltet ist und über einen dritten Schleifkontakt mit einem Masseanschluß der Lichtmaschine und/oder des Reglers (4) wirkverbunden ist, so daß bei Überschreiten einer durch die Zenerdiode (9) bestimmten Spannung an der Maschinenklemme (D+) ein Strom durch die Hilfswicklung (5.2) fließt, welcher eine zur Erregerwicklung (5,1) gegensinnige Durchflutung bewirkt.

2. Einrichtung nach Anspruch 1,
**dadurch gekennzeichnet,**
- daß die Zenerdiode (9) im stehenden Teil der Lichtmaschine untergebracht ist.

3. Einrichtung nach Anspruch 2,
**dadurch gekennzeichnet,** - daß die Zenerdiode (9) zusammen mit wenigstens einem von mehreren Gleichrichterventilen an/in einem gemeinsamen Kühlelement untergebracht ist.

4. Einrichtung nach Anspruch 1,
**dadurch gekennzeichnet**,
- daß die Zenerdiode (9) als im Regler (4) einhäusig mitenthaltenes Bauelement ausgebildet ist.

5. Einrichtung nach Anspruch 1,
**dadurch gekennzeichnet**, - daß die Zenerdiode (9) am/im Läufer (5.3) der Lichtmaschine untergebracht ist.

## Claims

1. An arrangement for limiting the terminal voltage on a polyphase current dynamo with a fixed stator winding (1) acting on a rectifier and with, rotating with the machine rotor (5.3), an energising winding (5.1), this latter being susceptible to the application of energising current as a function of the magnitude of a delivered voltage via a regulator (4) and a first wiping contact and whereby said energising winding (5.1) is connected in parallel with at least one free run valve (8), characterised in that the rotor also has an auxiliary winding (5.2) which propagates the energising winding (5.1) with the same direction of rotation and in that the connecting point of the two windings is via a second wiping contact connected in series and is conductively connected to the dynamo terminal (D+) which delivers the energising current and in that the auxiliary winding (5.2) is conductively connected in series with a Zener diode (9) via a third wiping contact with an earth connection of the dynamo and/or of the regulating means (4) so that if a voltage determined by the Zener diode (9) is exceeded, at the dynamo terminal (D+), a current flows through the auxiliary winding (5.2) which brings about a through-flow in the opposite direction of the energising winding (5.1).

2. An arrangement according to Claim 1, characterised in that the Zener diode (9) is accommodated in the standing part of the dynamo.

3. An arrangement according to Claim 2, characterised in that the Zener diode (9) together with at least one of a plurality of rectifier valves, is accommodated on/in a common cooling element.

4. An arrangement according to Claim 1, characterised in that the Zener diode (9) is constructed as a component element which is contained in the same housing as the controlling means (4).

5. An arrangement according to Claim 1, characterised in that the Zener diode (9) is accommodated on/in the rotor (5.3) of the dynamo.

## Revendications

1. Dispositif pour limiter la tension aux bornes d'alternateurs triphasés comportant un enroulement statorique fixe (1), agissant sur un redresseur, et un enroulement excitateur (5.1), qui tourne avec le rotor (5.3) de l'alternateur, et dans lequel cet enroulement peut être chargé par un courant d'excitation, par l'intermédiaire d'un régulateur (4) et d'un premier contact glissant, en fonction de l'intensité de l'amplitude d'une tension délivrée, et au moins une valve à effet unidirectionnel (8), qui est conductrice lors d'une interruption du courant d'excitation côté régulateur, est branchée en parallèle avec ledit enroulement excitateur (5.1),
caractérisé en ce
- que le rotor possède en outre un enroulement auxiliaire (5.2), qui prolonge l'enroulement excitateur (5.1) avec le même sens d'enroulement, et que le point de jonction des deux enroulements est relié d'une manière conductrice, par l'intermédiaire d'un second contact glissant, à la borne D(+) de l'alternateur, qui délivre le courant d'excitation, que l'enroulement auxiliaire (5.2) est branché en série avec une diode Zener (9) et est relié, selon une liaison active, par l'intermédiaire d'un troisième contact glissant, à une borne de masse de l'alternateur et/ou du régulateur (4), de sorte que lors du dépassement d'une tension, déterminée par la diode Zener (9), sur la borne D(+) de l'alternateur dans l'enroulement auxiliaire (5.2) circule un courant qui fournit un flux de courant magnétique en sens opposé de celui fourni par l'enroulement excitateur (5.1).

2. Dispositif selon la revendication 1,
caractérisé en ce
- que la diode Zener (9) est disposée dans la partie fixe de l'alternateur.

3. Dispositif selon la revendication 2,
caractérisé en ce
- que la diode Zener (9) est disposée, conjointement avec au moins l'une de plusieurs valves redresseuses, sur/dans un élément de refroidissement commun.

4. Dispositif selon la revendication 1,
caractérisé en ce
- que la diode Zener (9) est réalisée sous la forme d'un composant contenu dans le régulateur (4) à l'intérieur d'un seul boîtier.

5. Dispositif selon la revendication 1,
caractérisé en ce
- que la diode Zener (9) est disposée sur/dans le rotor (5.3) de l'alternateur.
